# EUROPEAN PATENT APPLICATION

(11) **EP 4 231 010 A1**
(43) Date of publication of application: **23.08.2023**
(21) Application number: 22157103.7
(22) Date of filing: 16.02.2022
(51) Int. Cl.: G01N 31/22, G01N 21/64, G01N 21/77

(54) **AN OPTOCHEMICAL SENSOR, AND USES THEREOF**

(71) Applicant: University College Cork-National University of Ireland Cork, Cork (IE)
(72) Inventor: Papkovsky, Dmitri, Cork (IE); Zhdanov, Alexander, Cork (IE); Li, Liang, Cork (IE)
(74) Representative: Purdylucey Intellectual Property

(57) **Abstract**

An optochemical sensor comprises a substrate coated with a solid-state optically active pH-sensitive material comprising a hydrophobic plasticised polymer matrix, a protonable photoluminescent dye selected from the group consisting of a hydrophobic metal-free porphyrin and a porphyrin-ketone, and a hydrophobic proton transfer reagent, in which the hydrophobic proton-transfer reagent comprises a salt of a fluorinated derivative of tetraphenylborate. The salt of the substituted tetraphenylborate derivative is selected from a salt of tetrakis[3,5-bis(trifluoromethyl)phenyl]borate and a salt of tetrakis-(pentafluorophenyl)borate. The hydrophobic polymer comprises poly(n-butylacrylate) or poly(vinylchloride) and a suitable plasticiser. The use of substituted fluorinated TCPB analogues, in particular sodium salt of tetrakis[3,5-bis(trifluoromethyl)phenyl]borate, as a proton transfer agent (PTA), is seen to have excellent solubility in plasticised PVC and poly(n-butylacrylate) matrices and low cytotoxic action on cells. Moreover, by changing the concentration of this PTA in the sensor, one can tune the sensor pKa values and measured range of pH values, to cover the most important physiological range of pH (7.5 - 6.0) and ECA rates.

## Description

### Field of the Invention

The present invention relates to the field of optochemical sensors, particularly fluorescence-based pH sensors, phosphorescence-based oxygen sensors, multi-analyte sensors and use of such sensors with biological samples, particularly those containing cultured cells. Its particular focus is on the sensors for assessment of samples containing live mammalian cells by measuring their oxygen consumption rates (OCR) and extracellular acidification rates (ECA) and responses of cells to stress and metabolic stimulation.

### Background to the Invention

A broad variety of optical pH and O2 sensors have been described in recent years (Steinegger et al - Chem. Rev. 2020, 120, 22, 12357-12489; Wolfbeis & Wang - Chem. Soc. Rev., 2014, 43, 3666-3761; Quenched-phosphorescence detection of molecular oxygen: applications in life sciences, Eds. RI Dmitriev, DB Papkovsky, Royal Society of Chemistry, 2018). However, when it comes to the use of such sensors for live cell analysis and multi-parametric detection, they all show significant drawbacks that limit their use and operational performance. The main limitations include: non-optimal spectral characteristics and detection schemes without internal referencing; optical interferences and low multiplexing potential due to significant cross-talk between the sensors; unstable calibration tedious and frequent re-calibration: toxic action on cells and low safety of the sensors; complex chemistry and sensor fabrication process. In particular:
Klimant (EP1397672 (A1), 2004) described an O2 sensor material which comprises a phosphorescent dye embedded in particles of O2-permeable and water-impermeable polymer which are suspended in a hydrophilic polymer and deposited on microplate wells. The sensor allows self-referencing by phosphorescence lifetime measurement, but it does not describe similar pH or dual pH/O2 sensors. Presens GmbH (US6602716 (B1), 2003-08-05) described a pH sensor which uses two indicator dyes with different lifetime characteristics and Dual Lifetime Referencing by phase measurements, however it does not describe dual O2/pH sensors with self-referencing capabilities.

Seahorse Biosciences (US2010124761 (A1) - 2010-05-20) describe the measurement of ECA and OCR by means of dual photoluminescence based pH/O2 sensors provided by Presens. However, these sensors operate in intensity mode, have no self-referencing capabilities and exhibit significant cross-talk.

Papkovsky (US2011236986 (A1) - 2011-09-29) described a solid-state dual O2/pH sensor based on one meso-substituted Pt-porphyrin dye. While its lifetime-based detection of O2 is robust and stable, the pH sensor is not self-referenced (intensity based detection), shows prominent cross-sensitivity with O2 and has not been optimised for use with live cells.

Uray & Niederreiter (US2002058793 (A1) - 2002-05-16) described fluorescent Eu3+ chelates with longwave excitation bands and robust fluorescence lifetime response to pH, which can be used as self-referenced pH-sensitive probes. These probes were later combined with the phosphorescent O2-sensitive probes (Papkovsky & Fernandes - US2006002822 (A1) - 2006-01-05) to enable selective (by wavelength discrimination) and simultaneous lifetime based detection of pH and O2, and of cellular ECA and OCR (Hynes et al - Anal Biochem, 2009, 390: 21-28). However, these hydrophilic sensor chemistries can only be used with aqueous samples on disposable basis. Solid-state sensor materials on their basis have not been described.

Dalfen et al described pH sensors based on diazaoxotriangulenium dyes and fluorescence lifetime readout (Anal Chem, 2019, 91: 808). However, pH response of such sensors relies on homo-FRET, so it is dependent on the dye concentration, so it is not fully referenced and stable. Their spectral characteristics are broad do not favour multiplexing, neither with O2 sensors, nor other fluorescent bio-probes.

Hydrophobic protonable metal-free porphyrins, such as ocaethylporphine (OEP), and porphyrin-ketones, such as ocaethylporphine-ketone (OEPK), were previously suggested for general optical pH sensing by incorporating them in plasticised PVC membranes together with tetrachlorophenyl borate salt (TCPB) as proton transfer agent (PTA) (Papkovsky - J. Photochem. Photobiol. Part A., 1997, 104: 151). However, these pH sensors were not fully developed and optimised for cell analysis, multi-parametric sensing and internally referenced detection. Specifically, the imitations of existing OEP and OEPK based pH sensors are: i) low solubility of PTA (TCPB) in the polymer matrix (PVC plasticised with DOS) which led to inhomogeneous and irreproducible pH sensors; ii) high intrinsic toxicity of the sensor on cultured cells, which was also due to the PTA used.

It is an objective of the invention to overcome at least one of the above-referenced problems.

### Summary of the Invention

The invention overcomes the limitations of existing sensors and provides a range of advanced pH and pH/O2 sensors and sensor systems specially designed and optimised for the analysis of biological samples, particularly cultured cells.

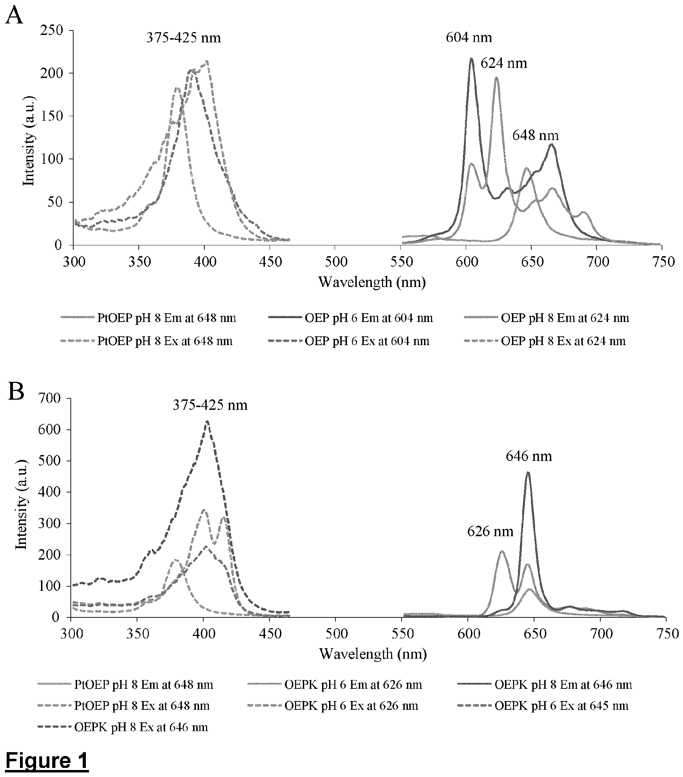

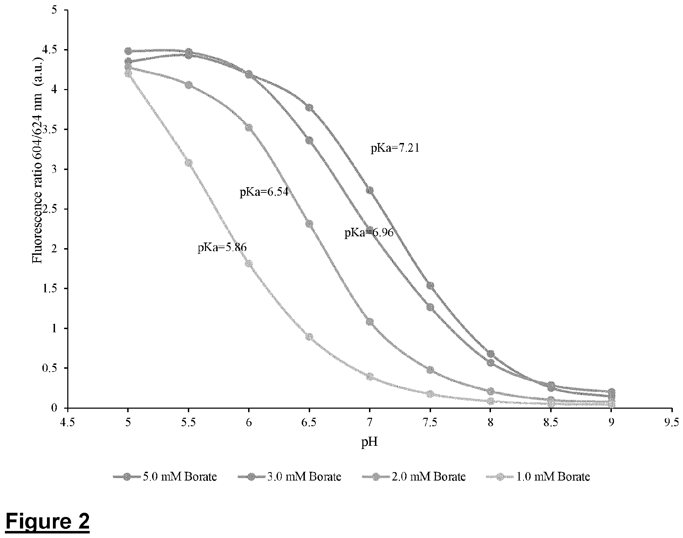

One aspect of the invention is the use of hydrophobic protonable metal-free porphyrins or related structures such as porphyrin-ketones as fluorescent pH indicators in solid-state optochemical pH sensors. In particular, lipophilic ocaethylporphine (OEP), ocaethylporphine-ketone (OEPK) dyes and alike, which are excitable at 400 nm (the Soret band) and possess bright emission at >600 nm with sharp well-resolved bands of their neutral and protonated forms, are well suited for this (**Figure 1**). In addition, the use of substituted fluorinated TCPB analogues, in particular sodium salt of tetrakis[3,5-bis(trifluoromethyl)phenyl]borate, as a proton transfer agent (PTA), was seen to have excellent solubility in plasticised PVC and poly(n-butylacrylate) matrices and low cytotoxic action on cells (**Table 1**). Moreover, by changing the concentration of this PTA in the sensor, one can tune the sensor pKa values and measured range of pH values, to cover the most important physiological range of pH (7.5 - 6.0) and ECA rates (**Figure 2**). Another example of a PTA for use in the invention is tetrakis-(pentafluorophenyl)borate Li+ salt. These chemical components led us to the production of new high-performance pH sensors.

In a first aspect, the invention provides a solid state optically active pH-sensitive material comprising:
a hydrophobic polymer;
a protonable photoluminescent dye selected from the group consisting of hydrophobic metal-free porphyrins and porphyrin-ketones; and
a hydrophobic proton transfer reagent,
characterised in that the hydrophobic proton-transfer reagent comprises a salt of a fluorinated derivative of tetraphenylborate.

The invention also provides an optochemical sensor comprising a substrate coated with the solid state optically active pH-sensitive material of the invention.

In any embodiment, the optochemical sensor or material is also capable of dual pH and oxygen sensing. In any embodiment, the optochemical sensor or material is capable of pH sensing by internally-referenced ratiometric fluorescence detection.

In any embodiment, the salt of a fluorinated tetraphenylborate derivative is a salt (e.g., a sodium salt) of tetrakis[3,5-bis(trifluoromethyl)phenyl]borate. Some other borate salts can also be used as PTA, such as a salt (e.g., a lithium salt) of tetrakis-(pentafluorophenyl)borate.

In any embodiment, the salt is a sodium salt. Other suitable salts may be employed, for example a potassium or lithium salt.

In any embodiment, the hydrophobic polymer comprises a plasticised poly(n-butylacrylate) or poly(vinylchloride) matrix.

In any embodiment, the plasticiser is dioctyl sebacate (DOS). Other plasticisers may be employed, for example cyanophenyl octyl ether (CPOE).

In any embodiment, the protonable photoluminescent dye is selected from otaethylporphyrin (OEP) and octaethylporphyrin-ketone (OEPK).

In any embodiment, the substrate is selected from an assay vessel and an insert for an assay vessel. The assay vessel may be an assay tube or a well of a multiwell plate, where the solid-state optically active pH-sensitive material is generally coated on at least a part of an inner surface of the assay vessel.

In any embodiment, the solid-state optically active pH-sensitive material comprises protonable photoluminescent dye at a concentration 0.01 - 0.25 mM, for example 0.01 to 0.1, 0.01 to 0.05, 0.05 to 0.1, 0.1 to 0.15, 0.15 to 0.2, or 0.2 to 0.25 mM.

In any embodiment, the solid-state optically active pH-sensitive material comprises a salt of a fluorinated derivative of tetraphenylborate at a concentration 0.5 - 5.0 mM, for example 0.5 to 1.0, 1.0 to 2.0, 2.0 to 3.0, 3.0 to 4.0 or 4.0 to 5.0 mM.

In any embodiment, the solid-state optically active pH-sensitive material is deposited on the substrate from a base solvent comprising a chloroform:THF mixture.

In any embodiment, the solid-state optically active pH-sensitive material coating has a coating thickness of 1-10 microns for example 1-3, 3-5, 5-7, 7-10, 1-5, 5-10 microns.

In any embodiment, the coating is applied as dots on a surface of the substrate.

In any embodiment, the solid-state optically active pH-sensitive material also contains a hydrophobic Pt-porphyrin oxygen-sensing dye.

In any embodiment, the solid-state optically active pH-sensitive material contains the hydrophobic Pt-porphyrin oxygen-sensing dye at a concentration of 0.01 - 2.5 mM, for example 0.01 to 0.1, 0.01 to 0.05, 0.05 to 0.1, 0.1 to 0.15, 0.15 to 0.2, or 0.2 to 0.25 mM.

In any embodiment, the hydrophobic Pt-porphyrin oxygen-sensing dye is selected from Pt-octaethylporphine (PtOEP) and Pt(ii)-tetrakis(pentafluorophenyl)porphine (PtPFPP).

In any embodiment, the optochemical sensor is used in combination with an additional fluorescent probe with an emission range of 400 to 600 nm. Examples of such probes include fluorescent indicators for intracellular Ca2+ (e.g. Fura-2, Fluo-4), mitochondrial membrane potential (e.g. TMRM, JC-1), nuclear stains (e.g. DAPI, Hoechst 2332), genetically encoded fluorescent protein tags (e.g. GFP, CFP, YFP) and transfected cells.

In another aspect, the invention provides a method of measuring a pH parameter of an aqueous sample, comprising:
bringing the sample in physical contact with the optochemical sensor of the invention;
exposing the optochemical sensor to excitation radiation to create an excited state optochemical sensor;
measuring a fluorescence parameter of the protonable photoluminescent dye in the optochemical sensor; and
converting the measured fluorescence parameter to a pH parameter of the sample.

The pH parameter may be pH or another pH-related parameter such as Extracellular Acidification Rate (ECA). The oxygen parameter may be oxygen concentration (absolute or relative) or another oxygen-related parameter such as Oxygen Consumption Rate (OCR).

In any embodiment, the method comprises:
measuring fluorescence intensity signals of both a protonated and neutral forms of the protonable photoluminescent dye in the excited optochemical sensor;
calculating a ratio of the fluorescence intensity signals of the protonated and neutral forms of the protonable photoluminescent dye; and
converting the calculated ratio to a pH parameter of the sample by applying the pre-determined sensor calibration.

In any embodiment, the measured fluorescence parameter is a fluorescence lifetime signal, wherein the method comprises converting the fluorescence lifetime signal sample to a pH parameter of the sample by applying the pre-determined sensor calibration.

In another aspect, the invention provides a method of measuring a pH parameter and an oxygen parameter of a sample, comprising:
incubating the sample with the optochemical sensor of any of Claims 13 to 16; exposing the optochemical sensor to excitation radiation to create an excited state optochemical sensor;
measuring a fluorescence parameter of the protonable photoluminescent dye in the optochemical sensor;
converting the measured fluorescence parameter to a pH parameter of the sample; measuring a phosphorescence parameter (e.g., a lifetime (PLT) signal) of the hydrophobic Pt-porphyrin dye in the optochemical sensor; and converting the phosphorescence parameter to an oxygen parameter of the sample.

In any embodiment, the fluorescence parameter is obtained by measuring fluorescence intensity signals of both a protonated and neutral forms of the protonable photoluminescent dye in the excited state optochemical sensor, and calculating a ratio of the fluorescence intensity signals of the protonated and neutral forms of the protonable photoluminescent dye, wherein the method comprises converting the calculated ratio to a pH parameter of the sample.

In any embodiment, the measured fluorescent parameter is a fluorescence lifetime signal, wherein the method comprises converting the fluorescence lifetime signal sample to a pH parameter of the sample.

In any embodiment, the pH parameter and oxygen parameter are measured simultaneously in the same sample.

In any embodiment, the pH parameter is selected from pH and Extracellular Acidification Rate (ECA).

In any embodiment, the oxygen parameter is selected from oxygen concentration and Oxygen Consumption Rate (OCR).

In any embodiment, the excitation radiation has the wavelength of the porphyrins' Soret band.

In any embodiment, the fluorescence and/or phosphorescence parameter of the excited optochemical sensor are measured in a range of 600 to 750 nm.

In any embodiment, the fluorescence intensity signals of the protonated and neutral forms of the protonable photoluminescent dye are each selectively measured using a narrow band emission filter.

In an embodiment in which the optochemical sensor includes an additional fluorescent probe with an emission range of 400 to 600 nm, the method comprises exciting and measuring the fluorescence of the probe in a range of 400 to 600 nm.

Other aspects and preferred embodiments of the invention are defined and described in the other claims set out below.

### Brief Description of the Figures

**Figure 1****.** Spectral characteristics of OEP and PtOEP (A) and OEPK and PtOEP (B) dyes and pH and O2 sensors on their basis.
**Figure 2****.** Fluorescence spectral response and pH calibrations for the sensors based on OEP dye in plasticised PVC membrane with different concentrations of sodium tetrakis[3,5-bis(trifluoromethyl)phenyl]borate (PTA).
**Figure 3****.** Fluorescence lifetime response and pH calibrations for the sensors based on OEP and OEPK dyes.
**Figure 4****.** PLT response of the dual pH/O2 sensor to sample deoxygenation: PtOEP in PBS/PSS.
**Figure 5****.** ECA (A) and OCR (B) profiles of samples containing HCT 116 cells in suspension, measured with the OEP/PtOEP dual sensors in a 96-well microplate on a fluorescence plate reader.

### Detailed Description of the Invention

All publications, patents, patent applications and other references mentioned herein are hereby incorporated by reference in their entireties for all purposes as if each individual publication, patent or patent application were specifically and individually indicated to be incorporated by reference and the content thereof recited in full.

Where used herein and unless specifically indicated otherwise, the following terms are intended to have the following meanings in addition to any broader (or narrower) meanings the terms might enjoy in the art:
Unless otherwise required by context, the use herein of the singular is to be read to include the plural and *vice versa.* The term "a" or "an" used in relation to an entity is to be read to refer to one or more of that entity. As such, the terms "a" (or "an"), "one or more," and "at least one" are used interchangeably herein.

As used herein, the term "comprise," or variations thereof such as "comprises" or "comprising," are to be read to indicate the inclusion of any recited integer (e.g. a feature, element, characteristic, property, method/process step or limitation) or group of integers (e.g. features, element, characteristics, properties, method/process steps or limitations) but not the exclusion of any other integer or group of integers. Thus, as used herein the term "comprising" is inclusive or openended and does not exclude additional, unrecited integers or method/process steps.

As used herein, the term "hydrophobic plasticised polymer" refers to a physical mixture of a water-insoluble polymer with a lipophilic plasticiser.

As used herein, the term "hydrophobic metal-free porphyrin" refers to the group of normally substituted porphyrins with hydrophobic side substituents in 1,2,3,4,5,6,7,8 positions, such as octaethylporphine, octamethylporphine, coproporphyrin I tetramethyl ester, coproporphyrin I tetrabutyl ester, coproporphyrin III tetramethyl ester, mesoporphyrin.

As used herein, the term "hydrophobic porphyrin-ketone" refers to the group of porphyrin-ketone dyes with hydrophobic side substituents in 1,2,3,4,5,6,7,8 positions, such as octaethylporphine-ketone, octamethylporphine-ketone, coproporphyrin-ketone I tetramethyl ester, coproporphyrin-ketone I tetrabutyl ester, coproporphyrin-ketone III tetramethyl ester.

As used herein, the term "solid state" as applied to the sensing material refers to a material which, once applied onto solid substrates as a coating, does not dissolve in aqueous samples, nor leaks its components into the sample.

As used herein the term "the salt of a fluorinated derivative of tetraphenylborate" refers to a lipophilic salt of a fluorinated derivative of tretraphenylborate. Examples include salts of tetrakis[3,5-bis(trifluoromethyl)phenyl]borate or tetrakis-(pentafluorophenyl)borate. The salt may be a sodium, potassium or lithium salt.

### Exemplification

The invention will now be described with reference to specific Examples. These are merely exemplary and for illustrative purposes only: they are not intended to be limiting in any way to the scope of the monopoly claimed or to the invention described. These examples constitute the best mode currently contemplated for practicing the invention.

The invention was aimed at overcoming the limitations of existing sensors and providing a range of advanced pH and pH/O2 sensors and sensor systems specially designed and optimised for the analysis of biological samples, particularly cultured cells.

One aspect of the invention is the use of hydrophobic protonable metal-free porphyrins or related structures such as porphyrin-ketones as fluorescent pH indicators in solid-state optochemical pH sensors. In particular, ocaethylporphine (OEP), ocaethylporphine-ketone (OEPK) dyes and alike, which are excitable at around 400 nm (the Soret band) and possess bright emission at >600 nm with sharp well-resolved bands of their neutral and protonated forms, are well suited for this (Figure 1). In addition, sodium tetrakis[3,5-bis(trifluoromethyl)phenyl]borate was seen to have excellent solubility in plasticised PVC and poly(n-bulylacrylate) matrices and low toxic action on cells, thus producing new high-performance pH sensors (**Table 1**).

**Table1: Effects of different borates on the viability of mammalian cells**

| Borate type | Cell line | Dyes * | Borate concentrations (mM) | | | | Blank |
|---|---|---|---|---|---|---|---|
| | | | 1 mM | 2 mM | 3 mM | 5 mM | |
| (ClC₆H₄)₄BK | HCT 116 | a | 56.4 ± 1.4 | 64.8 ± 5.6 | 67.1 ± 2.6 | 67.0 ± 5.0 | 100 ± 1.0 |
| | | b | 58.5 ± 0.7 | 66.6 ± 4.9 | 64.3 ± 4.3 | 69.3 ± 3.3 | |
| C₂₄BF₂₀Li · 2.5C₄H₁₀O | HCT 116 | a | 69.6 ± 1.8 | 73.4 ± 1.9 | 83.8 ± 0.4 | 88.7 ± 1.9 | 100 ± 1.0 |
| | | b | 74.6 ± 0.5 | 75.7 ± 1.2 | 79.4 ± 3.5 | 87.5 ± 0.9 | |
| (C₆H₅)₄BNa | HCT 116 | a | 75.0 ± 3.0 | 83.4 ± 2.1 | 90.6 ± 0.6 | 92.2 ± 1.1 | 100 ± 1.5 |
| | | b | 67.8 ± 0.3 | 77.3 ± 0.6 | 82.1 ± 2.4 | 88.3 ± 0.8 | |
| | A594 | a | 88.7 ± 0.3 | 92.9 ± 0.1 | 96.1 ± 0.9 | 94.6 ± 1.2 | 100 ± 1.1 |
| | | b | 81.0 ± 2.3 | 89.6 ±1.4 | 93.7 ±1.8 | 95.5 ± 1.6 | |
| | SW480 | a | 72.1 ± 0.1 | 83.7 ± 1.3 | 88.0 ± 3.8 | 91.8 ± 2.3 | 100 ± 1.1 |
| | | b | 70.1 ± 1.7 | 83.8 ± 1.0 | 87.5 ± 1.5 | 90.8 ± 0.0 | |
| | SH-SY5Y | a | 93.5 ± 1.7 | 90.1 ± 1.8 | 88.8 ± 0.5 | 87.6 ± 1.9 | 100 ± 0.8 |
| | | b | 89.8 ± 2.1 | 92.7 ± 1.6 | 90.6 ± 3.4 | 86.1 ± 1.9 | |
| | | | | | | | |

| | | | | | | | |
|---|---|---|---|---|---|---|---|
| * a: *0.08 mM OEP*/*0.25 Mm PtOEP; b: 0.08 mM OEPK*/*0.25 mM PtOEP* | | | | | | | |

Moreover, by changing the concentration of this PTA in the sensor, one can tune the sensor pKa values and measured range of pH values, to cover the most important physiological range of pH (8.0 - 6.0) and ECA rates (**Figure 2**). Li+ salt of tetrakis(pentafluorophenyl)borate can also be used as PTA in the invention.

The Applicant has also discovered that fluorescence of the neutral and protonated forms of the porphyrin fluors can be detected selectively with narrow-band emission filters. Using pairs of such emission filters/wavelengths, protonation state of the sensor can be monitored in the ratiometric intensity mode. This can provide internally referenced, stable once-off calibration (**Figure 2**).

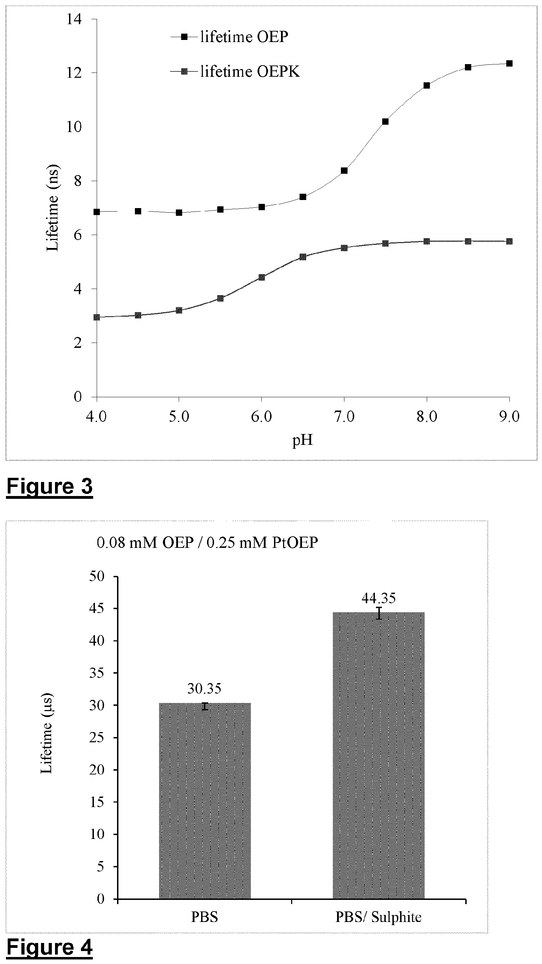

Furthermore, studying the photophysical properties of the new sensors, the Applicant discovered that their protonation/deprotonation is accompanied by prominent reversible changes in fluorescence lifetime (FLT) of these indicator dyes (**Figure 3**). Surprisingly, the FLT values for such sensors and the magnitude of FLT changes were exceptionally large (6.9 - 12.3 ns for OEP and 3 - 5.7 ns for OEPK). This allows the implementation of the internally-referenced FLT based detection of pH with these sensors. Such FLT based sensing of pH is far superior than intensity based sensing (Steinegger et al, 2020), and it can be realised by relatively simple technical means. For comparison, the existing pH sensors show much shorter range and span of FLT values (1-3 ns, 5-20% change), and are hardly suitable for efficient FLT based pH sensing.

Another aspect of the invention is that the above new pH sensors are well-suited for multiplexing with the optical O2 sensors based on phosphorescence quenching (Wang & Wolfbeis, 2014; Dmitriev & Papkovsky, 2018). Both spectral and temporal multiplexing can be used, which allow the development of highly efficient dual pH/O2 sensors for cell analysis. In particular, solid-state sensors with internally-referenced detection of both pH and O2 can be developed. Such sensors have not been described so far.

Thus, common O2 sensitive indicator dyes of Pt-porphyrin nature, particularly PtOEP and PtPFPP dyes, show excellent spectral compatibility with OEP and OEPK. These phosphors can be excited at the same wavelength (~400 nm - the Soret band of tetrapyrrols), and they emit in the similar range of 600-700 nm with maximum at around 650 nm. Such properties allow simple optical configuration of the detector, which can utilise: a) one excitation and one emission wavelength (or band) for combined detection of both OEP/OEPK and PtOEP, or b) one excitation and two emission wavelengths for selective detection of OEP and PtOEP.

Moreover, the polymeric matrix used in the OEP/OEPK based pH sensors (i.e. plasticised PVC with the PTA), appears to be well-suited also for O2 sensing. It provides near-optimal quenching of the O2 indicator dye (PtOEP), giving robust, reproducible and reversible PLT response to O2 in the physiological range concentrations and OCR values (**Figure 4**).

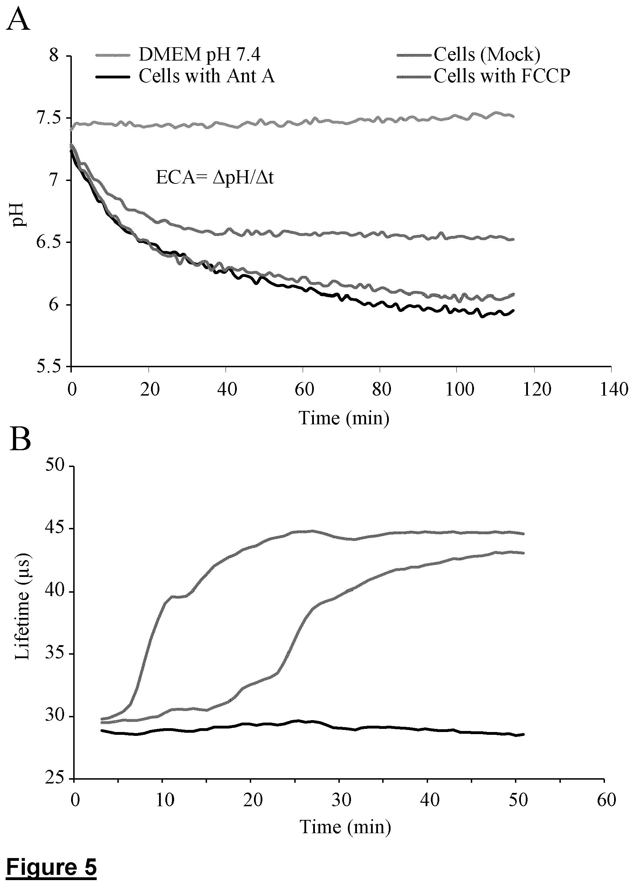

Compared to the ns FLT values of the OEP/OEPK based pH sensors, the Pt-porphyrin based O2 sensors phosphoresce in the microsecond PLT range (10-100 µs). This allows selective discrimination of both indicator dyes by LT based or time-gated detection. Furthermore, the dual sensor based on OEP/OEPK and PtOEP dyes allows implementation of internally referenced detection and sensing of both pH and O2 using: a) ratiometric intensity readout for pH and PLT readout for O2, or b) nanosecond FLT readout for pH and microsecond PLT readout for O2. These detection modes provide effective, stable and interference free sensing of the two key parameters of the sample (pH and O2) and stable, calibration-free operation of the sensor(s). The sensor can also be used for simultaneous measurement of ECA and OCR in samples containing live cells (**Figure 5**).

Yet another advantageous feature of the pH and dual pH/O2 sensors of the invention is that they operate in the relatively narrow and longwave spectral window (all the emission occurs at 600-750 nm), without any blocking of the remaining visible range. Therefore, they can be used in conjunction with many other conventional fluorescent probes and sensors that emit in the range 400-600 nm. Examples of such probes include fluorescent indicators for Ca2+ (e.g. Fura-2, FLuo4), mitochondrial membrane potential (e.g. TMRM, JC-1), nuclear stains (e.g. DAPI, Hoechst 2332), genetically encoded fluorescent protein tags (e.g. GFP, CFP, YFP) and transfected cells. These fluorescent probes for important parameters of cells can be detected in the presence of the new pH/O2 sensors without any significant cross-interference. Such measurements can provide even more information and specific data about the cells and biological samples being tested. All the above features are important for biological applications, particularly for live cell analysis, ECA and OCR measurements. They result in the creation of advanced optochemical pH, and dual pH/O2 sensing systems, which are more efficient and robust than existing sensors of similar type.

### MATERIALS AND METHODS

Platinum octaethylporphyrin (PtOEP), ocaethylporphine (OEP) and OEP-ketone (OEPK) dyes were from Frontier Scientific. Sodium salt of tetrakis[3,5-bis(trifluoromethyl)phenyl]borate (borate1), tetrahydrofuran (THF), high molecular weight poly (vinyl chloride) (PVC), bis(2-ethylhexyl) sebacate (DOS), sodium sulphite, FCCP, antimycin A, DMEM were from Sigma-Aldrich.

Sensor coatings were prepared from a cocktail containing plasticised PVC (2% PVC and 4% DOS in THF), Pt-OEP and OEP/OEPK (0.01-0.25 mM in CHCl3) and borate (0.5-5 mM in CHCl3), which was applied in 6 microliter aliquots on pieces of polyester film Mylar or into wells of round bottom 96-well polypropylene microplate (Greiner), and allowed to dry at room temperature overnight.

Fluorescence spectra of the sensors, spotted on Mylar film and inserted in quartz cuvettes with PBS having different pH, were measured on Cary Eclipse spectrofluorometer at 390±10 nm excitation. Phosphorescence lifetimes of the sensors (microsecond range) were measured on a Victor2 reader (Perkin-Elmer, Waltham, MA, USA) using time-resolved fluorescence (TR-F) mode and rapid lifetime determination method (Dmitriev, Papkovsky, CMLS, 2012), both in oxygenated (air-saturated) and deoxygenated state (sulfite) in PBS. Fluorescence and phosphorescence lifetimes of the sensors were also measured on a confocal FLIM-TCSPC microscope (Becker & Hickl, Berlin, Germany) (Becker et al - Adv Exp Med Biol, 2017, 1035:19-30) at different pH in PBS.

HCT 116 cells were suspended in unbuffered (ECAR) and buffered (OCR) DMEM (supplemented with 10 mM glucose, 1 mM sodium pyruvate and 2 mM L-glutamine). ECAR and OCR were analysed on a Victor reader in TR-F mode using 3.0 × 105 cells (ECA) or 6.0 × 105 cells in 200 µL (OCR) of medium in wells containing sensors. For OCR, medium was sealed with 150 µl of heavy oil. FCCP (mitochondrial uncoupler, 0.25 µM) and antimycin A (Ant A, mitochondrial complex III inhibitor, 2 µM) were used for cell treatment.

CellTiter-Glo^{®} Assay (Promega, Madison, WI) was used for the total cellular ATP analysis. HCT 116 cells (2.0 × 104 cells per well) were suspended in ECA medium and deposited in wells of a 96-well plate containing sensors. After a 1 hr incubation at 37°C, cells were lysed with CellTiter-Glo^{®} reagent and then total ATP content was analysed in a white 96-well microplate on a Victor2 reader in luminescence mode.

### Equivalents

The foregoing description details presently preferred embodiments of the present invention. Numerous modifications and variations in practice thereof are expected to occur to those skilled in the art upon consideration of these descriptions. Those modifications and variations are intended to be encompassed within the claims appended hereto.

## Claims

1. An optochemical sensor comprising a substrate coated with a solid-state optically active pH-sensitive material, in which the solid-state optically active pH-sensitive material comprises:
a hydrophobic plasticised polymer matrix;
a protonable photoluminescent dye selected from the group consisting of a hydrophobic metal-free porphyrin and a porphyrin-ketone; and
a hydrophobic proton transfer reagent,
in which the hydrophobic proton-transfer reagent comprises a salt of a fluorinated derivative of tetraphenylborate.

2. An optochemical sensor according to Claim 1, in which the salt of a substituted tetraphenylborate derivative is selected from a salt of tetrakis[3,5-bis(trifluoromethyl)phenyl]borate and a salt of tetrakis-(pentafluorophenyl)borate.

3. An optochemical sensor according to Claim 2, in which the salt is a sodium salt.

4. An optochemical sensor according to any preceding Claim, in which the hydrophobic polymer comprises poly(n-butylacrylate) or poly(vinylchloride) and a suitable plasticiser.

5. An optochemical sensor according to Claim 4, in which the plasticiser is dioctyl sebacate.

6. An optochemical sensor according to any preceding Claim, in which the protonable photoluminescent dye is selected from otaethylporphyrin (OEP) and octaethylporphyrin-ketone (OEPK).

7. An optochemical sensor according to any preceding Claim, in which the substrate is selected from an assay vessel and an insert for an assay vessel.

8. An optochemical sensor according to any preceding Claim, in which the solid-state optically active pH-sensitive material comprises protonable photoluminescent dye at a concentration 0.01 - 0.25 mM.

9. An optochemical sensor according to any preceding Claim, in which the solid-state optically active pH-sensitive material comprises a salt of a fluorinated derivative of tetraphenylborate at a concentration 0.5 - 5.0 mM.

10. An optochemical sensor according to any preceding Claim, in which the optically active pH-sensitive material dissolved in chloroform: THF mixture is applied on an assay substrate producing a coating.

11. An optochemical sensor according to any preceding Claim, in which the solid-state optically active pH-sensitive material coating has a coating thickness of 1-10 microns.

12. An optochemical sensor according to any preceding Claim, in which the coating is applied as dots on a surface of the substrate.

13. An optochemical sensor according to any preceding Claim, in which the solid-state optically active pH-sensitive material comprises a hydrophobic Pt-porphyrin oxygen-sensing dye optionally at a concentration of 0.01 - 2.5 mM.

14. An optochemical sensor according to Claim 13, in which the hydrophobic Pt-porphyrin oxygen-sensing dye is selected from a Pt-octaethylporphine (PtOEP) dye and a Pt(ii)-tetrakis(pentafluorophenyl)porphine (PtPFPP) dye.

15. An optochemical sensor according to any preceding Claim, combined with an additional fluorescent probe with an emission range of 400 to 600 nm.
